# EUROPEAN PATENT APPLICATION

(11) **EP 2 458 889 A1**
(43) Date of publication of application: **30.05.2012**
(21) Application number: 11171359.0
(22) Date of filing: 24.06.2011
(51) Int. Cl.: H04N 21/61, H04N 21/462, H04N 7/18, H04N 21/4782

(54) **Broadcast reception apparatus and control method thereof**

(30) Priority: 30.11.2010 JP 2010267576
(71) Applicant: Kabushiki Kaisha Toshiba, Tokyo 105-8001 (JP)
(72) Inventor: Kashihara, Yutaka, Tokyo, 105-8001 (JP)
(74) Representative: Wenning, Ekkehard

(57) **Abstract**

According to one embodiment, a broadcast reception apparatus includes a reception unit (12 to 14), restoration unit (15), acquisition unit (22, 31) and switching unit (22, 24). The reception unit (12 to 14) is configured to receive a broadcast signal. The restoration unit (15) is configured to restore an image signal based on the broadcast signal received by the reception unit. The acquisition unit (22, 31) is configured to sequentially access a plurality of online cameras via a network on a preset date and time and acquire an image signal captured by each of the online cameras. The switching unit (22, 24) is configured to selectively switch the image signal restored by means of the restoration unit and the image signal acquired by means of the acquisition unit to provide the switched image signal for image display.

## Description

Embodiments described herein relate generally to a broadcast reception apparatus such as a digital television reception apparatus and a control method thereof.

As is well known in the art, as the above digital television reception apparatus, an apparatus having a function of not only receiving a digital television broadcast to provide the same for viewing but also accessing a necessary site via a communication network such as the Internet to acquire desired content from the site and displaying the same is widely used.

More specifically, the user operates a remote controller with respect to a digital television reception apparatus connected to the Internet to display a list of accessible Web sites, select a desired Web site from the list and access the Web site. Then, the user acquires a Web page from the selected Web site and displays the same.

In the digital television reception apparatus having the Internet connection function, the user is required to perform the operation of accessing the Web site when displaying the Web page. Therefore, for example, when he periodically views the same Web site, it becomes troublesome for the user to handle the apparatus.

Particularly, recently, a plurality of online cameras (Webcams) for capturing the scenes or the states of towns are installed in tourist cities or main cities. Images captured by the online cameras can be acquired as a Web page and viewed if the user accesses a corresponding Web site via the Internet.

With the above online camera, for example, it is often required to periodically view an image of the same scene captured by the same online camera, for example, view the sunrise at the same time every morning from the same position. As described above, it is troublesome for the user to perform the operation of accessing the Web site each time the Web page is displayed.

A general architecture that implements the various features of the embodiments will now be described with reference to the drawings. The drawings and the associated descriptions are provided to illustrate the embodiments and not to limit the scope of the invention.
FIG. 1 is a block configuration diagram showing one example of a signal processing system of a digital television broadcast reception apparatus according to one embodiment;
FIG. 2 is an external view for illustrating one example of a remote controller used in the digital television broadcast reception apparatus in the above embodiment;
FIG. 3 is a diagram for illustrating one example of an online camera list used in the digital television broadcast reception apparatus in the above embodiment;
FIG. 4 is a view for illustrating one example of a setting screen displayed on the digital television broadcast reception apparatus in the above embodiment;
FIG. 5 is a view for illustrating one example of a slideshow setting screen displayed on the digital television broadcast reception apparatus in the above embodiment;
FIG. 6 is a view for illustrating one example of a start-date-and-time setting screen displayed on the digital television broadcast reception apparatus in the above embodiment;
FIG. 7 is a diagram for illustrating another example of an online camera list used in the digital television broadcast reception apparatus in the above embodiment;
FIG. 8 is a view for illustrating one example of a menu setting screen displayed on the digital television broadcast reception apparatus in the above embodiment;
FIG. 9 is a block configuration diagram showing a modification of the digital television broadcast reception apparatus according to the above embodiment; and
FIG. 10A, FIG. 10B and FIG. 10C are views for illustrating still other examples of the online camera list used in the digital television broadcast reception apparatus in the above embodiment.

Various embodiments will be described hereinafter with reference to the accompanying drawings. In general, according to one embodiment, a broadcast reception apparatus includes a reception unit, restoration unit, acquisition unit and switching unit. The reception unit is configured to receive a broadcast signal. The restoration unit is configured to restore an image signal based on the broadcast signal received by the reception unit. The acquisition unit is configured to sequentially access a plurality of online cameras via a network on a preset date and time and acquire an image signal captured by each of the online cameras. The switching unit is configured to selectively switch the image signal restored by means of the restoration unit and the image signal acquired by means of the acquisition unit to provide the switched image signal for image display.

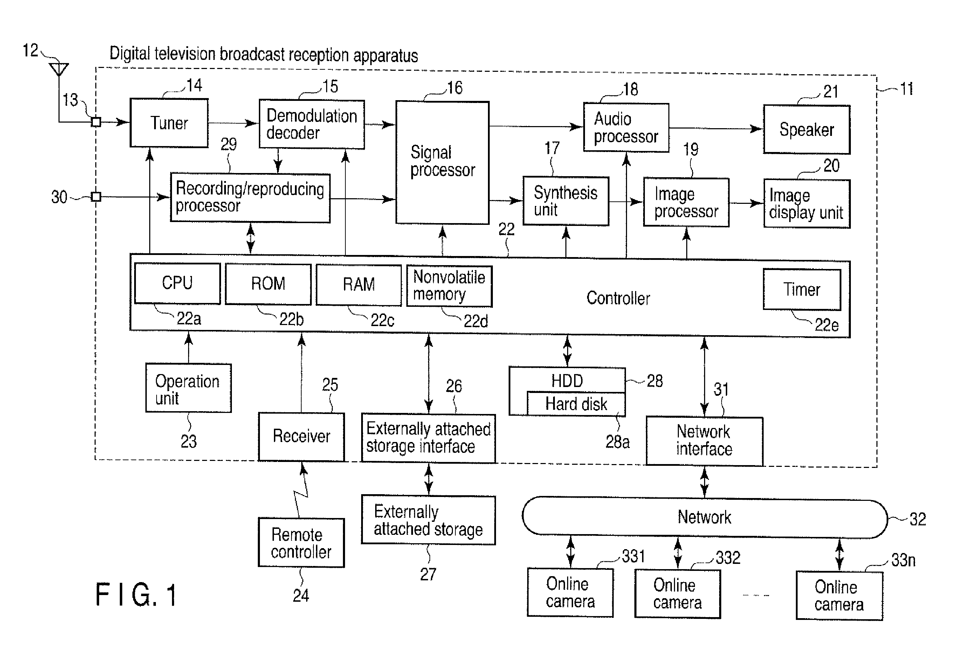

FIG. 1 shows a signal processing system of a digital television broadcast reception apparatus 11 explained in this embodiment. The digital television broadcast reception apparatus 11 can not only provide image display based on an image signal for normal (two-dimensional) display but also provide image display based on an image signal for stereoscopic (three-dimensional) display.

That is, a digital television broadcast signal received by an antenna 12 is supplied to a tuner unit 14 via an input terminal 13 and a broadcast signal on a desired channel is selected. Then, the broadcast signal selected by the tuner unit 14 is supplied to a demodulation decoder 15 and the broadcast signal is output to a signal processor 16 after being restored to a digital image signal, audio signal and the like.

The signal processor 16 subjects the digital image signal and audio signal supplied from the demodulation decoder 15 to preset digital signal processes, respectively. In the preset digital signal process performed by the signal processor 16, a process for converting an image signal for normal (two-dimensional) display to an image signal for stereoscopic (three-dimensional) display, a process for converting an image signal for stereoscopic (three-dimensional) display to an image signal for normal (two-dimensional) display and the like are included.

Then, the signal processor 16 outputs a digital image signal to a synthesis unit 17 and outputs a digital audio signal to an audio processor 18. The synthesis unit 17 superimposes an on-screen display (OSD) signal on the digital image signal supplied from the signal processor 16 and outputs the resultant signal.

In this case, if the digital image signal supplied from the signal processor 16 is an image signal for normal (two-dimensional) display, the synthesis unit 17 superimposes an OSD signal on the image signal as it is and outputs the resultant signal. Further, if the digital image signal supplied from the signal processor 16 is an image signal for stereoscopic (three-dimensional) display, the synthesis unit 17 subjects a to-be-superimposed OSD signal to a signal process for stereoscopic (three-dimensional) display corresponding to an input image signal for stereoscopic (three-dimensional) display, then superimposes the thus processed OSD signal on the input image signal and outputs the resultant signal.

The digital image signal thus output from the synthesis unit 17 is supplied to an image processor 19 and converted to a format that can be displayed on a plane image display unit 20 having a liquid crystal display panel or the like, for example, in the latter stage. Then, an image signal output from the image processor 19 is supplied to the image display unit 20 and used for image display.

Further, the audio processor 18 converts an input digital audio signal to an analog audio signal of a format that can be played back by means of a speaker 21 provided in the latter stage. Then, the analog audio signal output from the audio processor 18 is supplied to the speaker 21 and used for audio playback.

All of the operations of the digital television broadcast reception apparatus 11 including the above various reception operations are generally controlled by a controller 22. The controller 22 contains a central processing unit (CPU) 22a and controls the respective units in response to operation data from an operation unit 23 set on the main body of the digital television broadcast reception apparatus 11 or in response to operation data transmitted from a remote controller 24 and received by a receiving unit 25 to reflect the nature of the operation.

In this case, the controller 22 utilizes a read-only memory (ROM) 22b, random access memory (RAM) 22c and nonvolatile memory 22d that are built-in memories of the digital television broadcast reception apparatus 11. The ROM 22b stores a control program executed by the CPU 22a. The RAM 22c is used to provide a work area for the CPU 22a. The nonvolatile memory 22d stores various setting data items, control data items and the like.

Further, an externally attached storage interface 26 is connected to the controller 22. For example, the externally attached storage interface 26 is connection means conforming to the Universal Serial Bus (USB) connection standard or the like and externally attached storage 27 such as a USB flash drive can be freely connected thereto. As a result, the controller 22 can transfer data with respect to the externally attached storage 27 via the externally attached storage interface 26.

Further, a hard disk drive (HDD) 28 is connected to the controller 22. The controller 22 performs a control operation based on the operation of the operation unit 23, remote controller 24 or the like by the user to encode a digital image signal and audio signal acquired from the demodulation decoder 15 and convert the same to a preset recording format by means of a recording/reproducing processor 29. Then, the controller supplies the above signal to the HDD 28 to record the same on a hard disk 28a.

The controller 22 performs a control operation based on the operation of the operation unit 23, remote controller 24 or the like by the user to read a digital image signal and audio signal from the hard disk 28a by means of the HDD 28 and decode the same by means of the recording/reproducing processor 29. After this, the thus obtained signals are supplied to the signal processor 16 and can be used for the image display and audio playback.

An input terminal 30 is connected to the digital television broadcast reception apparatus 11. The input terminal 30 is used to directly input a digital image signal and audio signal from the exterior of the digital television broadcast reception apparatus 11. The digital image signal and audio signal input via the input terminal 30 are passed through the recording/reproducing processor 29 and then supplied to the signal process 16 under control of the controller 22. After this, the above signals are used for the image display and audio playback.

Further, the digital image signal and audio signal input via the input terminal 30 are passed through the recording/reproducing processor 29 under control of the controller 22 and are then used for recording and playback with respect to the hard disk 28a by means of the HDD 28.

Additionally, the controller 22 is connected to an external network (for example, an Internet or the like) 32 via a network interface 31. Therefore, the controller 22 accesses one of various sites (for example, Web sites or the like) connected to the network 32 based on the operation of the operation unit 23, remote controller 24 or the like by the user to acquire image content (for example, a Web page or the like) provided on the site.

In the present embodiment, as the various sites connected to the network 32, sites that provide contents of images captured by online cameras (Webcams) are dealt with. Therefore, in FIG. 1, for easy understanding, the configuration in which a plurality of online cameras 331, 332, ... , 33n are connected to the network 32 is shown.

The controller 22 selectively accesses the online cameras 331 to 33n, supplies an image signal acquired from the accessed online camera to the signal processor 16 and uses the same for image display. That is, the controller 22 can selectively access the online cameras 331 to 33n and display the images captured there.

Further, the controller 22 includes a timer 22e and measures the date and time or the elapsed time by means of the timer 22e. As a result, the controller 22 can realize a programmed viewing operation of automatically receiving a digital television broadcast on a preset channel on a preset date and time and using the same for viewing, a programmed recording operation of automatically receiving a digital television broadcast on a preset channel on a preset date and time and recording the same on the HDD 28 or the like.

Further, the controller 22 utilizes the timer 22e to realize a programmed viewing operation with respect to one of the online cameras 331 to 33n on the network 32 for, for example, automatically accessing a preset online camera (for example, 331) on a preset date and time, acquiring an image captured by the online camera 331 and displaying the image.

In this case, the controller 22 can realize a so-called slideshow of sequentially accessing a plurality of online cameras 331 to 33n on the network 32 in a preset order at preset time-intervals to sequentially display images captured by the online cameras 331 to 33n at preset time-intervals.

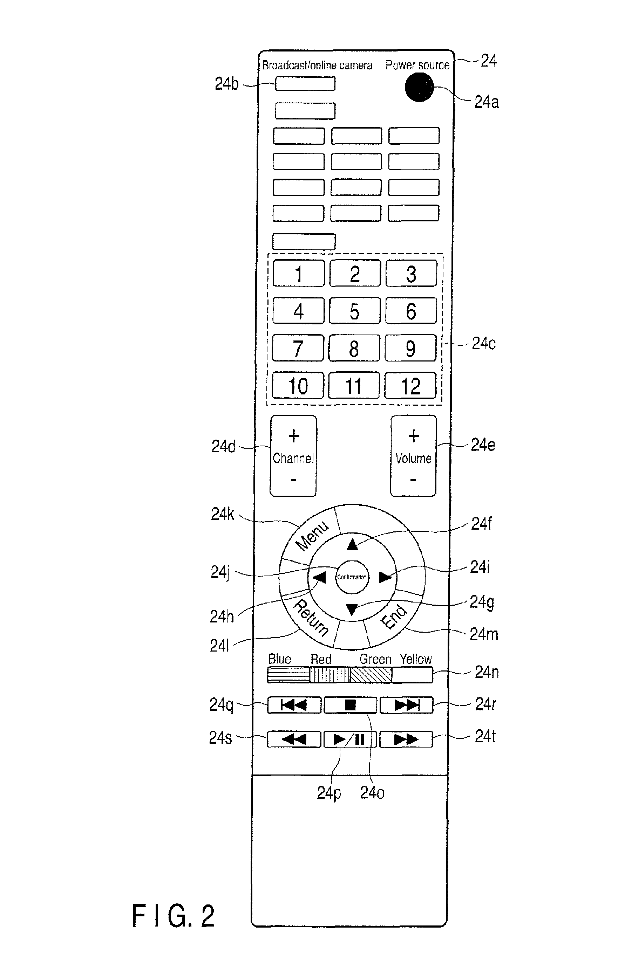

FIG. 2 is an external view of the remote controller 24. The remote controller 24 mainly includes a power source key 24a, broadcast/online camera switching key 24b, numeric keys 24c, channel up/down key 24d, volume adjustment key 24e, cursor-up key 24f, cursor-down key 24g, cursor-left key 24h, cursor-right key 24i, confirmation key 24j, menu key 24k, return key 241, end key 24m, color keys 24n in four colors (blue, red, green, yellow) and the like.

When the broadcast/online camera switching key 24b among the above keys is switched to a broadcast position, the controller 22 performs a control operation to use a digital television broadcast signal received by the antenna 12 for image display and audio playback. Further, when the broadcast/online camera switching key 24b is switched to an online camera position, the controller 22 performs a control operation to use an image selectively acquired from the online cameras 331 to 33n for display.

Additionally, the remote controller 24 includes a playback stop key 240, playback/pause key 24p, reverse skip key 24q, forward skip key 24r, fast-return key 24s, fast-forward key 24t and the like.

That is, the playback, stop and pause operations can be performed with respect to data such as an image and sound acquired from the HDD 28 by pressing the playback stop key 24o and playback/pause key 24p of the remote controller 24.

Further, a so-called reverse skip operation or forward skip operation of skipping data such as an image and sound played back by means of the HDD 28 for each preset amount in a reverse direction or forward direction with respect to the playback direction can be performed by pressing the reverse skip key 24q or forward skip key 24r of the remote controller 24.

A so-called fast-return playback operation or fast-forward playback operation of continuously and rapidly playing back data such as an image and sound played back by means of the HDD 28 in a reverse direction or forward direction with respect to the playback direction can be performed by pressing the fast-return key 24s or fast-forward key 24t of the remote controller 24.

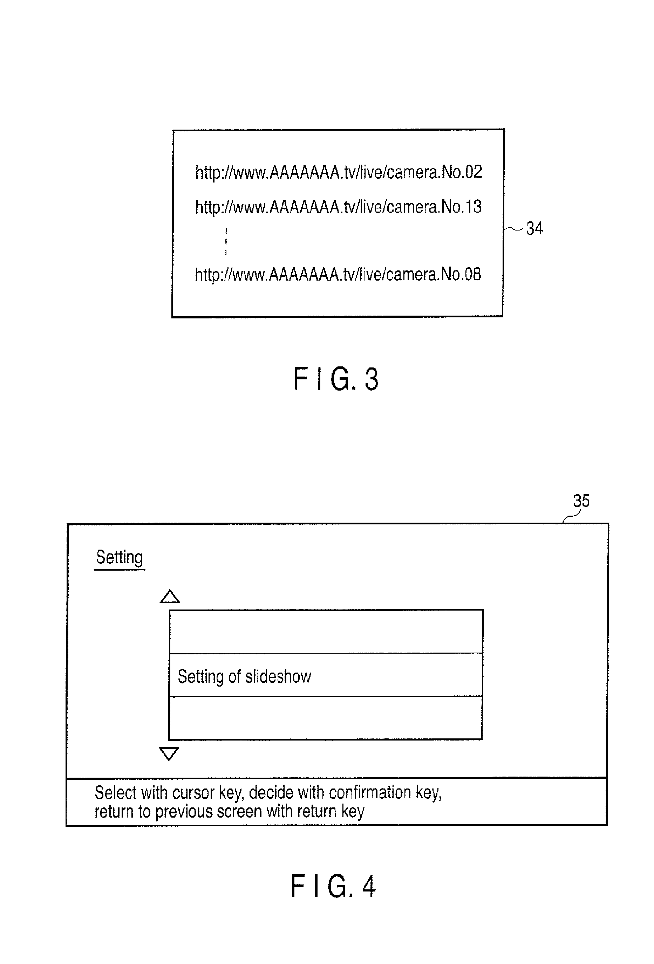

Next, a slideshow of sequentially displaying images captured by the online cameras 331 to 33n at preset time-intervals is explained in detail. That is, an online camera list 34 as shown in FIG. 3 is recorded in the externally attached storage 27. When providing a slideshow, the online camera list 34 is a text file in which uniform resource locators (URLs) that are data items used to respectively access the online cameras 331 to 33n are described in an accessing order.

The online camera list 34 is formed if the user acquires URLs of the online cameras 331 to 33n that have captured images desired to be viewed by means of a personal computer (PC) (not shown), for example, performs an edit operation of arranging the URLs in an order to be displayed in the slideshow and records the result of editing in the externally attached storage 27.

In the URLs shown in FIG. 3, for example, "AAAAAAAA" indicates the name of a place and No. XX indicates a identification number of a corresponding one of the online cameras 331 to 33n installed in the location with the name of the above place. More specifically, for example, "AAAAAAAA" indicates Mt. Fuji and No. XX indicates identification numbers of the respective online cameras 331 to 33n installed to capture images of Mt. Fuji seen from various angles.

Further, various setting data items required for realizing the slideshow are recorded in the nonvolatile memory 22d. The setting data items mainly include a date and time on which the slideshow is started, a time-interval at which images acquired from the online cameras 331 to 33n are displayed and the like and can be adequately set by the user.

The operation of setting the setting data, that is, the operation of recording the setting data in the nonvolatile memory 22d is started when the user presses the menu key 24k of the remote controller 24, enters plural types of menu screens configured in a hierarchical structure and displays a setting screen 35 as shown in FIG. 4 on the image display unit 20.

On the setting screen 35, plural (three shown in the drawing) setting items are displayed. The setting items are scrolled in an upward or downward direction if the user presses the cursor-up key 24f or cursor-down key 24g of the remote controller 24. Thus, the user can observe all of the setting items.

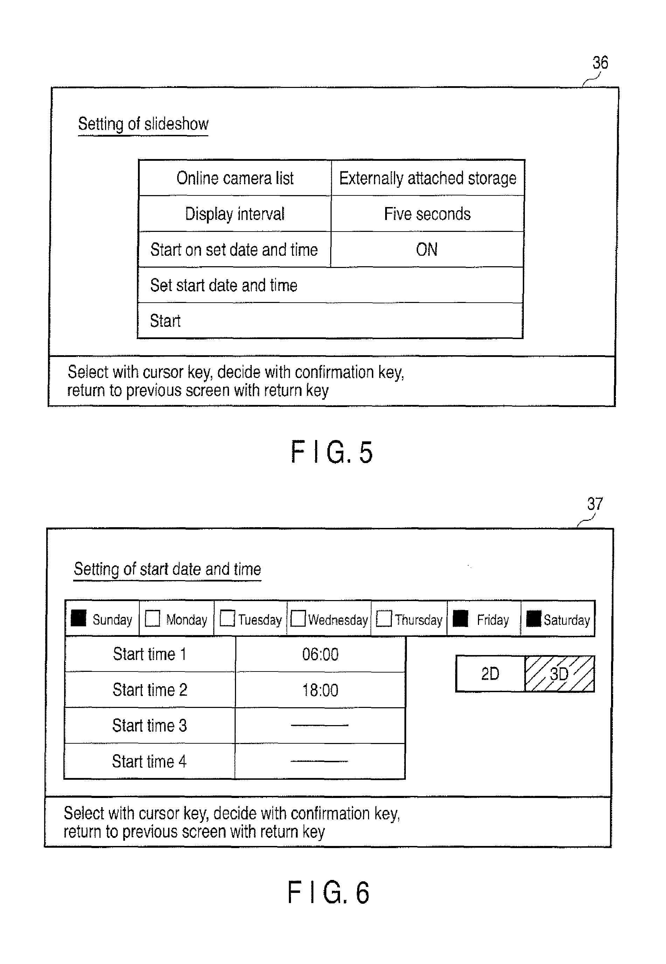

The user presses the cursor-up key 24f or cursor-down key 24g of the remote controller 24 to select the item of "slideshow setting" from the plural setting items and presses the confirmation key 24j. Then, a slideshow setting screen 36 as shown in FIG. 5 is displayed on the image display unit 20.

On the slideshow setting screen 36, five items of "online camera list", "display interval", "start on set date and time", "set start date and time" and "start" are displayed. The item of "online camera list" among the above items is used to set a place in which the online camera list 34 used is recorded and the externally attached storage 27 or built-in memory (memory 22b) can be set therein.

That is, if the cursor-up key 24f or cursor-down key 24g is pressed after pressing the cursor-up key 24f or cursor-down key 24g of the remote controller 24 to select the item of "online camera list" and pressing the confirmation key 24j, the externally attached storage 27 and built-in memory (nonvolatile memory 22d) can alternately be switched and set for each operation. In FIG. 5, the externally attached storage 27 is set.

The item of "display interval" is used to set the display interval when images captured by the online cameras 331 to 33n are sequentially displayed. If the cursor-up key 24f or cursor-down key 24g is pressed after pressing the cursor-up key 24f or cursor-down key 24g of the remote controller 24 to select the item of "display interval" and pressing the confirmation key 24j, the time that becomes longer or shorter by a preset amount can be set for each operation. In FIG. 5, five seconds is set.

The item of "start on set date and time" is used to start a slideshow on the set start date and time (on) or not (off). That is, if the cursor-up key 24f or cursor-down key 24g is pressed after pressing the cursor-up key 24f or cursor-down key 24g of the remote controller 24 to select the item of "start on set date and time" and pressing the confirmation key 24j, the start operation (on) and the non-start operation (off) can alternately be switched and set for each operation. In FIG. 5, the operation of starting the slideshow (on) is set.

Further, the item of "set start date and time" is an item of setting the date and time on which a slideshow is started. If the user presses the cursor-up key 24f or cursor-down key 24g of the remote controller 24 to select the item of "set start date and time" and presses the confirmation key 24j, a start-date-and-time setting screen 37 shown in FIG. 6 is displayed on the image display unit 20.

On the start-date-and-time setting screen 37, items indicating seven days of "Sunday, Monday, Tuesday, Wednesday, Thursday, Friday, Saturday", items indicating four start times of "start times 1, 2, 3, 4" and items of "2D/3D" are displayed. The items of "Sunday, Monday, Tuesday, Wednesday, Thursday, Friday, Saturday" are used to set the day on which the slideshow is started. If the user presses the cursor-up key 24f or cursor-down key 24g of the remote controller 24 to select a desired day and presses the confirmation key 24j, the selected day is set. In FIG. 6, Sunday, Friday and Saturday are set and black dots are attached thereto.

The items of "start times 1, 2, 3, 4" can be used to set four types of times at which a slideshow is started. If the user presses the cursor-up key 24f or cursor-down key 24g of the remote controller 24 to select a desired number and presses the confirmation key 24j, a start time corresponding to the selected number can be input. The operation of inputting the start time is performed by pressing the numeric keys 24c of the remote controller 24 and the start time is set when the confirmation key 24j is pressed. In FIG. 6, 6 am is set in the item of "start time 1" and 6 pm is set in the item of "start time 2".

The items of "2D/3D" can be used to select normal (two-dimensional) display or stereoscopic (three-dimensional) display for images from the online cameras 331 to 33n and the item of 2D or 3D is selected by pressing the cursor-left key 24h or cursor-right key 24i of the remote controller 24 and set by pressing the confirmation key 24j. In FIG. 6, the item of 3D is set as shown by hatching.

Further, in the slideshow setting screen 36 shown in FIG. 5, the item of "start" is used to immediately start a slideshow and the slideshow can be instantly started by pressing the cursor-up key 24f or cursor-down key 24g of the remote controller 24 to select the item of "start" and pressing the confirmation key 24j.

As described above, it is assumed that the online camera list 34 is recorded in the externally attached storage 27, various setting data items are recorded in the nonvolatile memory 22d and the controller 22 determines that, for example, 6 am on Sunday set as the slideshow start date and time is reached based on the date and time measurement by the timer 22c while the user switches the broadcast/online camera switching key 24b of the remote controller 24 in the online camera position.

Then, the controller 22 accesses the online camera 331, for example, based on the first URL recorded in the online camera list 34 recorded in the externally attached storage 27, acquires an image captured there and displays the image only for 5 seconds. After this, the controller 22 accesses the online camera 332, for example, based on the next URL recorded in the online camera list 34, acquires an image captured there and displays the image only for 5 seconds.

Thus, the controller 22 repeatedly performs the same operations as the above operation for all of the remaining URLs recorded in the online camera list 34. Finally, the controller accesses the online camera 33n, for example, based on the last URL recorded in the online camera list 34, acquires an image captured there and displays the image only for 5 seconds and then the slideshow is terminated.

When the image signal acquired from each of the online cameras 331 to 33n is an image signal for normal (two-dimensional) display, the controller 22 controls the signal processor 16 to convert an image signal acquired from each of the online cameras 331 to 33n to an image signal for stereoscopic (three-dimensional) display based on the setting of the item of "2D/3D". As a result, an image signal converted to the image signal for stereoscopic (three-dimensional) display by the signal processor 16 is displayed on the image display unit 20.

When the image signal acquired from each of the online cameras 331 to 33n is converted from the image signal for normal (two-dimensional) display to the image signal for stereoscopic (three-dimensional) display, a stereoscopic (three-dimensional) image signal process for handling a scene is performed. That is, since images captured by the online cameras 331 to 33n are often scenes, a display image that can be comfortably observed by the user can be obtained by performing an image signal process for handling a scene. As the image signal process for handling the scene, for example, a baseline is emphasized and a face-handling function and motion-handling function are invoked to display a stereoscopic image that gives an impression of depth and handles the scene.

According to the embodiment described above, since images captured by automatically and sequentially accessing the preset online cameras 331 to 33n on the preset slideshow start date and time can be viewed in the slideshow, the apparatus can be conveniently handled by the user and become satisfactory for practical use.

Further, in the embodiment described above, since the online camera list 34 is recorded in the externally attached storage 27 and the slideshow start date and time and display time-intervals are recorded in the nonvolatile memory 22d, images acquired from the online cameras 331 to 33n corresponding to all of the URLs described in the online camera list 34 can be used as display objects in one slideshow.

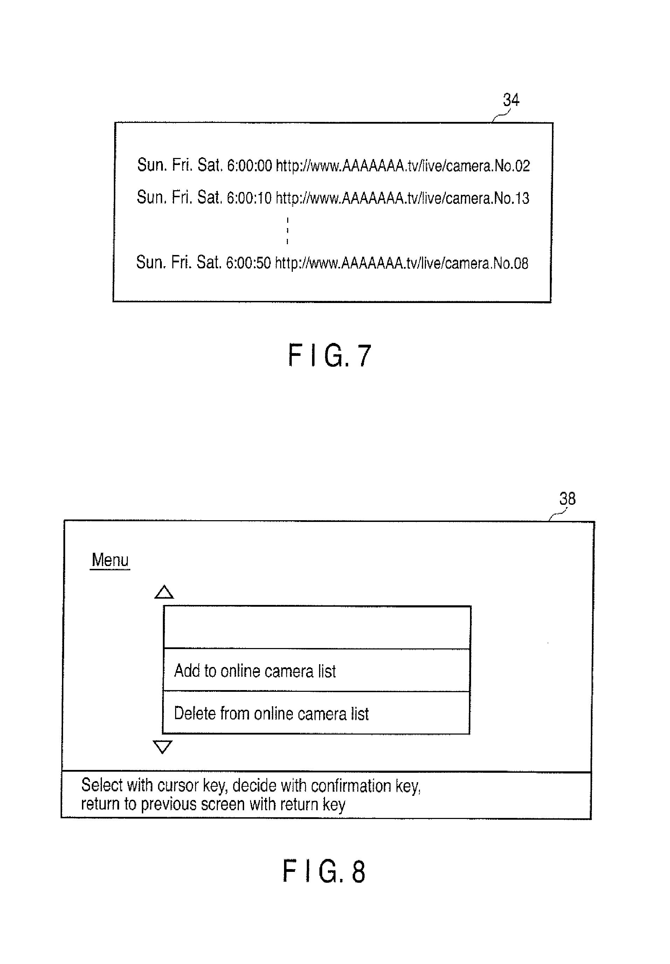

On the other hand, as shown in FIG. 7, start dates and times can be attached to the respective URLs recorded in the online camera list 34 recorded in the externally attached storage 27. In this case, since the start date and time can be set for each of the online cameras 331 to 33n, a slideshow with a high degree of freedom can be realized.

Further, the online camera list 34 shown in FIG. 3 and FIG. 7 can be copied from the externally attached storage 27 to the nonvolatile memory 22d and used. A URL of a new online camera can be added to the online camera list 34 copied to the nonvolatile memory 22d without using a PC or the like.

That is, the user operates the remote controller 24 to access a desired online camera on the network that is not yet included in the online camera list in the nonvolatile memory 22d and display an image captured by the online camera 332. In this state, if the user presses the yellow key 24n of the remote controller 24, a menu screen 38 as shown in FIG. 8 is displayed.

On the menu screen 38, plural (three shown in the drawing) setting items are displayed. The setting items are scrolled in the upward or downward direction when the user presses the cursor-up key 24f or cursor-down key 24g of the remote controller 24. As a result, the user can observe all of the setting items.

The user presses the cursor-up key 24f or cursor-down key 24g of the remote controller 24 to select the item of "addition to online camera list" from the plural setting items and presses the confirmation key 24j. As a result, a URL of the online camera that provides a previously displayed image is added to the online camera list 34 that is already recorded in the nonvolatile memory 22d.

The user selects a desired URL from the online camera list 34 recorded in the nonvolatile memory 22d to display the menu screen 38 while an image of the online camera corresponding to the URL is being displayed, selects the item of "delete from online camera list" from the plural setting items and presses the confirmation key 24j. As a result, a URL of the online camera that provides a previously displayed image is deleted from the online camera list 34 that is already recorded in the nonvolatile memory 22d.

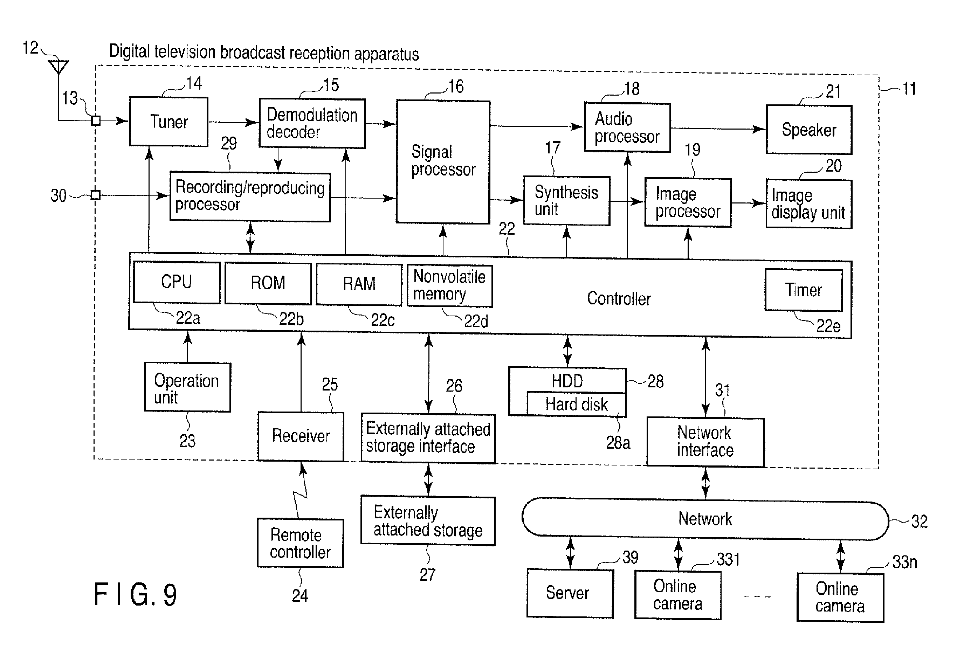

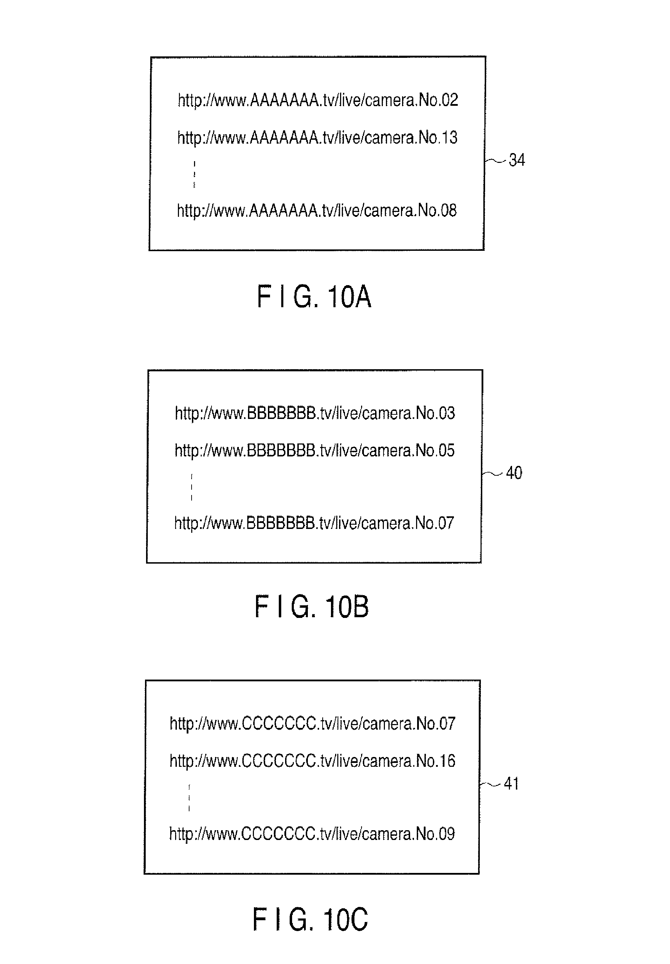

Further, as shown in FIG. 9, plural (three shown in the drawing) online camera lists 34, 40 and 41 as shown in FIG. 10A, FIG. 10B and FIG. 10C are prepared in a server 39 connected to the network 32. For example, the online camera lists 34, 40 and 41 are previously formed and prepared in the server 39 as online camera lists that are recommendable for display in the slideshow.

The user can operate the remote controller 24 to access the server 39, select a desired online camera list from the online camera lists 34, 40 and 41 and request the selected online camera list and, as a result, the user can download the selected online camera list from the server 39 to the nonvolatile memory 22d.

Further, the URL can be downloaded from the server 39 not in the online camera list unit but in the individual online camera unit and an online camera list can be formed in the nonvolatile memory 22d.

Then, if the broadcast/online camera switching key 24b of the remote controller 24 is switched to the online camera position while the plural online camera lists 34, 40 and 41 are being recorded in the nonvolatile memory 22d, a slideshow corresponding to the switched online camera list can be provided by switching the online camera lists 34, 40 and 41 like a channel.

## Claims

1. A broadcast reception apparatus **characterized by** comprising:
a reception module (12 to 14) configured to receive a broadcast signal,
a restoration module (15) configured to restore an image signal based on the broadcast signal received by the reception module (12 to 14),
an acquisition module (22, 31) configured to sequentially access a plurality of online cameras (331 to 33n) via a network (32) on a preset date and time and acquire signals of images captured by means of the respective online cameras (331 to 33n), and
a switching module (22, 24) configured to selectively switch the image signal restored by the restoration module (15) and the image signal acquired by the acquisition module (22, 31) and supply the image signal for image display.

2. The broadcast reception apparatus of Claim 1, **characterized in that** the acquisition module (22, 31) is configured to sequentially access the online cameras (331 to 33n) at preset time-intervals previously determined.

3. The broadcast reception apparatus of Claim 1, **characterized in that** the acquisition module (22, 31) includes a recording medium (27, 22d) configured to record an online camera list (34, 40, 41) in which access data items used to access the online cameras (331 to 33n) are described in an accessing order, data indicating an access date and time of one of the online cameras to be first accessed, and data indicating time-intervals at which the online cameras are accessed after the first online camera was accessed.

4. The broadcast reception apparatus of Claim 1, **characterized in that** the acquisition module (22, 31) includes a recording medium (27) configured to record
an online camera list (34) in which access data items used to access the online cameras (331 to 33n) are described in an accessing order and dates and times of accesses to the online cameras are described in correspondence to the respective access data items described.

5. The broadcast reception apparatus of Claim 1, **characterized by** further comprising a processor (16) configured to subject an image signal acquired by the acquisition module (22, 31) to a signal process for stereoscopic display and provide the resultant signal for image display.

6. The broadcast reception apparatus of Claim 5, **characterized in that** the processor (16) is configured to subject an image signal acquired by the acquisition module (22, 31) to a signal process for stereoscopic display for handling a scene.

7. The broadcast reception apparatus of Claim 1, **characterized in that** the acquisition module (22, 31) is configured to acquire signals of images captured by the respective online cameras (331 to 33n) as a Web page from a Web site.

8. A control method of a broadcast reception apparatus for controlling the broadcast reception apparatus (11) that restores an image signal based on a received broadcast signal, **characterized by** comprising:
sequentially accessing a plurality of online cameras (331 to 33n) via a network (32) on a preset date and time to acquire signals of images captured by the respective online cameras (331 to 33n), and
selectively switching the restored image signal and the acquired image signal and provide the image signal for image display.
